# EUROPEAN PATENT APPLICATION

(11) **EP 4 246 772 A1**
(43) Date of publication of application: **20.09.2023**
(21) Application number: 22162428.1
(22) Date of filing: 16.03.2022
(51) Int. Cl.: H02K 1/14, G01B 11/27, H02K 1/2791, H02K 7/18, H02K 15/16

(54) **ASSEMBLY OF A STATOR FOR A WIND TURBINE**

(71) Applicant: Siemens Gamesa Renewable Energy A/S, 7330 Brande (DK); Siemens Gamesa Renewable Energy GmbH & Co. KG, 20097 Hamburg (DE)
(72) Inventor: Fürst-Sylvester, Marius, 27478 Cuxhaven (DE); Henriksen, Benjamin, 7400 Herning (DK); Schneider, Thorsten, 27478 Cuxhaven (DE); Soerensen, Martin Bach, 7400 Herning (DK)
(74) Representative: SGRE-Association

(57) **Abstract**

It is disclosed a method for measuring the position of a plurality of points in a stator (20) of an electrical machine (10), the stator (20) including a shaft (25) axially extending between a first axial end (22) and a second axial end (23). The method includes the steps of:
bringing a measurement device (40) at least at one of the first axial end (22) and the second axial end (23),
relatively moving the stator (20) and the measurement device (40) and measuring the position of the plurality of points (51, 52).

## Description

### Field of the invention

The invention relates to a method and an arrangement for measuring the position of a plurality of points in a stator for an electrical generator. The invention further relates to a method for assembling a stator of an electrical generator. Particularly, but not exclusively, the invention can be applied to an electrical generator for a wind turbine. More particularly, but not exclusively, the invention can be applied to a permanent magnet electrical generator.

### Art background

The airgap, which is formed between the stator and a rotor in an electrical machine is an important design feature that contributes to determines the overall efficiency of the wind turbine. The tighter the airgap is and the less it fluctuates over the lateral surfaces at the axial ends of the stator and the rotor, the more energy can be generated and the higher the efficiency is. Fluctuations of the airgap are in particular influenced by the eccentricity of the coupling between the stator and the rotor of the electric machine. The overall eccentricity is determined in the stator by the shape of the stator fixed shaft about its central axis.

It is therefore desirable to provide a method and an arrangement for measuring the shape in a stator shaft of an electrical machine. It is further desirable to provide a method for assembling the stator, which minimizes the fluctuations of the airgap by controlling the external shape of the stator.

### Summary of the invention

This need may be met by the subject matter according to the independent claims. Advantageous embodiments of the present invention are described by the dependent claims.

According to a first aspect of the present invention it is provided a method for measuring the position of a plurality of points in a stator of an electrical machine, the stator including a shaft axially extending between a first axial end and a second axial end, the method including the steps of:
bringing a measurement device at least at one of the first axial end and the second axial end,
relatively moving the stator and the measurement device and measuring the position of the plurality of points.

According to embodiments of the present invention, a first plurality of points are defined at the first axial end. Said plurality of points at the first axial end may defined in holes for fixing a rotor bearing to the stator shaft.

According to embodiments of the present invention, at least a second plurality of points are defined at the second axial end. Said second plurality of points at the second axial end are defined in holes for fixing the stator shaft to a nacelle of a wind turbine.

According to embodiments of the present invention, wherein the measurement device is an optic device, particularly it may be laser device. The measurement device may be a light detection and ranging device.

According to a second aspect of the present invention it is provided a measurement arrangement for measuring the position of a plurality of points in a stator of an electrical machine, the stator including a stator shaft axially extending between a first axial end and a second axial end, the measurement arrangement including:
a supporting structure for receiving the stator shaft,
a measurement device movable with respect to the supporting structure for measuring the position of the plurality of points.

According to embodiments of the present invention, wherein the measurement device is an optic device, particularly it may be laser device. The measurement device may be a light detection and ranging device.

It should be understood, that features, individually or in any combination, disclosed, described, explained or provided for a method for measuring the position of a plurality of points in a stator of an electrical machine are also, individually or in any combination, applicable to a measurement arrangement for measuring the position of a plurality of points in a stator of an electrical machine according to embodiments of the present invention and vice versa.

According to a third aspect of the present invention it is provided an assembly method for assembling a stator of an electric machine, the stator having a shaft and a plurality of segments coupled to the shaft, the method including the steps of:
defining at least a first and a secondo plurality of points on the stator shaft to be measured according to any of the previous claims, the first plurality of points being defined at the first axial end, the second plurality of points being defined at the second axial end,
defining a first center of the first plurality of points and a second center of the second plurality of points,
defining a measured axis of the stator shaft as the axis comprising the first center and the second center,
assembling the stator including the plurality of segments and the stator shaft, so that the distance between the geometric axis of the stator and the measured axis of the stator shaft is minimized.

The methods above defined may partly be implemented in software and/or hardware. The electrical machine may be an electrical generator or an electrical motor. In particular, the electrical machine may be an electrical generator of a wind turbine.

The aspects defined above, and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a partial view of a wind turbine including an electrical generator.
- Figure 2: shows a schematic section of an electrical generator to be mounted on the wind turbine of Fig. 1.
- Figure 3: shows an exploded view of an electrical generator to be mounted on the wind turbine of Fig. 1.
- Figure 4: shows a partial view of an assembly of a stator and a rotor for the electric generator of Figs. 2 and 3.
- Figure 5: shows a first view of a measurement arrangement according to the present invention.
- Figure 6: shows a second view of a measurement arrangement according to the present invention.

### Detailed Description

The illustrations in the drawings are schematic. It is noted that in different figures, similar or identical elements are provided with the same reference signs.

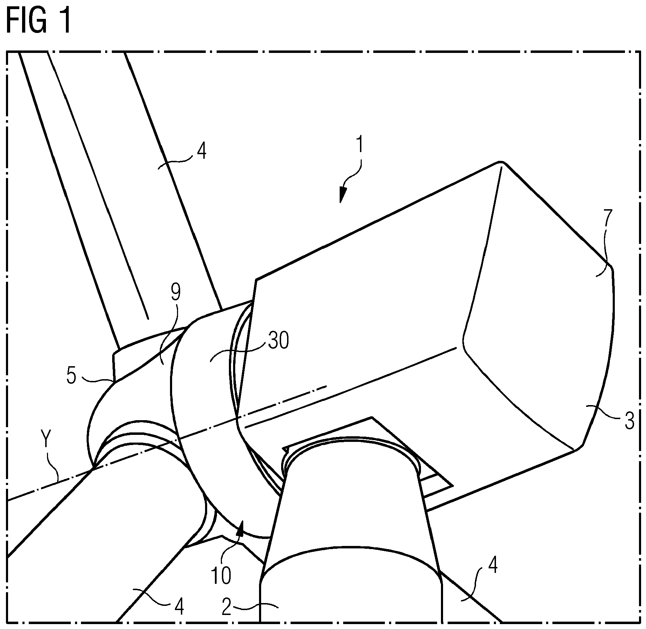

**Figure 1** shows a wind turbine 1 according to the invention. The wind turbine 1 comprises a tower 2, which is mounted on a non-depicted foundation. A nacelle 3 is arranged on top of the tower 2. The nacelle 3 comprises a main frame 7 rotatably coupled with the tower 2, an electrical generator 10 rotatably coupled with the main frame 7 and an hub 9 fixed to a rotor 30 of the electrical generator 10. The wind turbine 1 further comprises a wind rotor 5 including the hub 9 and at least one blade 4 fixed to the hub 9 (in the embodiment of Figure 1, the wind rotor comprises three blades 4. The wind rotor 5 is rotatable around a rotational longitudinal axis Y. The blades 4 extend substantially radially with respect to the longitudinal rotational axis Y. In general, when not differently specified, the terms axial, radial and circumferential in the following are made with reference to the longitudinal rotational axis Y. The electrical generator 10 including the rotor 30 and a stator (not visible in figure 1) fixed to the main frame 7 of the nacelle 3. In the embodiment of the attached figures the rotor 30 is radially external to the stator. The rotor 30 is rotatable with respect to the stator about the longitudinal rotational axis Y.

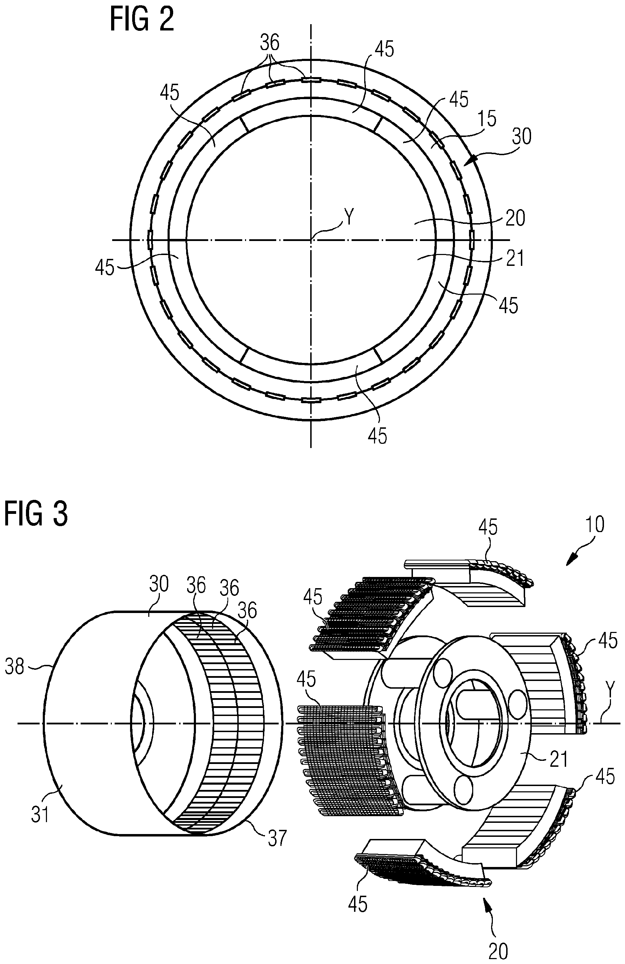

**Figure 2** shows a schematic view of a cross section of the electrical generator 10 on a radial plane orthogonal to the longitudinal rotational axis Y. The electrical generator 10 including the rotor 30 and the stator 20, which is radially internal to the rotor 30. In Fig. 2 the rotor 30 and the stator 20 are ideally represents as two coaxial ideal cylinders. The electrical generator 10 comprises an airgap 15 radially interposed between the stator 20 and the rotor 30, the airgap 15 extending circumferentially about the rotational axis Y. The stator 20 comprises a cylindrical inner core 21 to which six segments 45 are attached. Each segment 45 has a circumferential angular extension of 60°. According to other embodiments of the present invention, the stator 20 comprises a plurality of segments having another number (different from six) of segments. The rotor 30 comprises a plurality of circumferentially distributed permanent magnets 36 facing the airgap 15. In order that the airgap 15 is maintained constant at a minimum desired value, the external shape of the stator 20 has to approximate as much as possible an ideal cylindrical shape.

**Figure 3** shows an exploded view of the electrical generator 10 showing axonometric schematic representation of the rotor 30 and the stator 20. The rotor 30 comprises a cylindrical rotor house 31 axially extending between a drive end 37, which is subject to be mounted adjacent to the hub of the wind rotor 5, and an axially opposite non-drive end 38, which is subject to be mounted adjacent to the main frame 7 of the nacelle 3. The rotor house has cylindrical hollow shape radially extending between an inner surface 39, on which a plurality of respective seats for the permanent magnets 36 are defined, and an external surface 42. The magnets 31 are distributed on the inner side 39 of the rotor house 31 according to axial columns. Each column of magnets comprises a plurality of magnets 36 (for example two magnets 36 as shown in figure 2) aligned along the rotational axis Y.

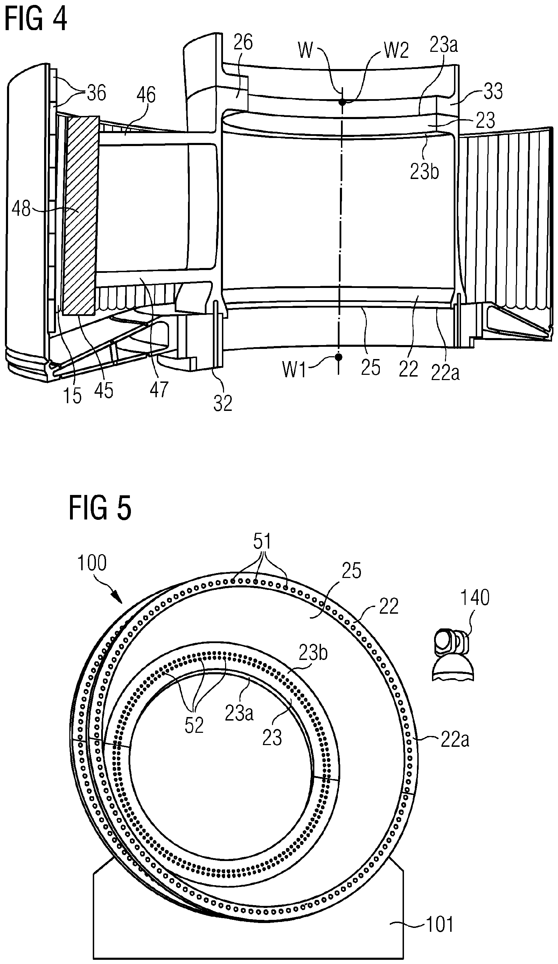

**Figure 4** shows partial assembly of the stator 20 and the rotor 30. The stator 20 and the rotor 30 are rotatably connected through a rotor bearing 32. The stator inner core 21 includes a fixed shaft 21 and two annular plates 46, 47 attached to the fixed shaft 25 and supporting the stator segments 45. The fixed shaft 25 between a first axial end 22 and a second axial end 23. A central axis W of the fixed shaft 25 is geometrically measured and defined as the axis comprising a first center W1 of a first plurality of points 51 and a second center W2 of a second plurality of points 52. The first plurality of points 51 are measured at the first axial end 22 and the second plurality of points 52 are measured at the second axial end 23. The first plurality of points 51 may be defined in holes (for example, the first plurality of points 51 may be the centers of such holes) being for fixing the rotor bearing 32 to the stator shaft 21. The second plurality of points 52 may be defined in holes (for example, the first plurality of points 51 may be the centers of such holes) provided on a flange 26 of the stator shaft 25 for fixing the stator shaft 25 to the nacelle 3, for example to a flange 33 provided in the nacelle 3. The flange 26 axially extends between two opposite annular surfaces 23a, 23b. The annular surfaces 23a is subject to be coupled with the flange 33 provided in the nacelle 3. The opposite flange 23b comprises the point 52 to be measured. The axis W is subject to aligned in the assembled electrical generator 10 with the longitudinal rotational axis Y. Knowing the position and orientation of the axis W of the stator shaft 25 permits to fix the stator segments 45 to the two annular plates 46, 47 so that the stator 20 has an essentially cylindrical envelope external surface 48, the geometrical axis of the external surface 48 being essentially coincident with the axis W of the stator shaft 25. The stator segments 45 are fixed so that a misalignment between the geometrical axis of the external surface 48 and the axis W of the stator shaft 25 is minimized. This permits to achieve an optimization of the airgap 15, so that the in operation the distance between the magnets 36 of the rotor 30 and the stator segments 45 is kept as close as possible constant and at a minimum desired value.

**Figure 5** shows a measurement arrangement 100 for measuring the position of the first and second plurality of points 51, 52. The measurement arrangement 100 includes a supporting structure 101 for receiving the stator shaft 25. The stator shaft 25 may be preferably oriented in the supporting structure 101 with the axis W oriented along an essentially horizontal direction. The measurement arrangement 100 further includes a measurement device 140 movable with respect to the supporting structure 10) for measuring the position of the plurality of points 51, 52 with respect to a fixed common reference system. The measurement device 140 may be an optic device, in particular a laser device. The measurement device 140 may be a light detection and ranging device. Both plurality of points 51, 52 may be measured with the measurement device 140 from one of the two axial ends 22, 23. Each plurality of point 51, 52 can be approximated to a respective circle through numerical techniques and for each circle the respective center W1, W2 may be calculated.

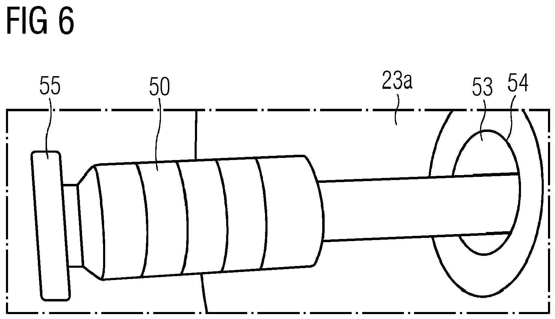

**Figure 6** shows components of the measurement arrangement 100 for deriving a third plurality of points 53 on the surface 23a of the flange 26 through the measurement of the points 52 on the surface 23b of the flange 26. The third plurality of points 53 may be defined in holes 54 (for example, the third plurality of points 53 may be the centers of the holes 54) provided on a flange 26 and connecting the two surfaces of the flange 26. For deriving the third plurality of points 53 the measurement arrangement 100 includes a plurality of measurement adapters 50, to be respectively inserted in the holes 54 in order that each measurement adapter 50 is associated to a respective point 53. Each adapter 50 extends between one end 55, which is subject to be aligned with the surface 23a including the third plurality of points 53 and a reflector (not shown in the figures), for example a so-called "cateye" reflector, which is subject to be seen by the measurement device 140. By detecting the reflector through the measurement device 140 and knowing the geometry of the measurement adapters 50, the third plurality of points 53 can be calculated. By using measurement adapters including reflectors the three plurality of points 51, 52, 53 may be measured with the measurement device 140 from one of the two axial ends 22, 23.

## Claims

1. A method for measuring the position of a plurality of points (51, 52) in a stator (20) of an electrical machine (10), the stator (20) including a shaft (25) axially extending between a first axial end (22) and a second axial end (23), the method including the steps of:
bringing a measurement device (40) at least at one of the first axial end (22) and the second axial end (23),
relatively moving the stator (20) and the measurement device (40) and measuring the position of the plurality of points (51, 52, 53).

2. The method according to claim 1, wherein a first plurality of points (51) are defined at the first axial end (22).

3. The method according to claim 2, wherein said plurality of points at the first axial end (22) are defined in holes for fixing a rotor bearing (32) to the stator shaft (21).

4. The method according to claim 1 or 2, wherein at least a second plurality of points (52) are defined at the second axial end (23).

5. The method according to claim 4, wherein said second plurality of points at the second axial end (23) are defined in holes for fixing the stator shaft (21) to a nacelle (3) of a wind turbine (1).

6. A measurement arrangement (100) for measuring the position of a plurality of points (51, 52) in a stator (20) of an electrical machine (10), the stator (20) including a stator shaft (25) axially extending between a first axial end (22) and a second axial end (23), the measurement arrangement (100) including:
a supporting structure (101) for receiving the stator shaft (25),
a measurement device (140) movable with respect to the supporting structure (101) for measuring the position of the plurality of points (51, 52, 53).

7. The measurement arrangement (100) according to claim 6, wherein the measurement device (40) is an optic device.

8. The measurement arrangement (100) according to claim 7, wherein the measurement device (40) is a laser device.

9. The measurement arrangement (100) according to claim 8, wherein the measurement device (40) is light detection and ranging device.

10. The measurement arrangement (100) according to any of the claims 6 to 9, further comprising a plurality of measurement adapters (50) including reflectors to be detected by measurement device (140) for measuring the position of a plurality of points (53) associated to the adapters (50).

11. An assembly method for assembling a stator (20) of an electric machine (10), the stator (20) having a shaft (25) and a plurality of segments (45) coupled to the shaft (25), the method including the steps of:
defining at least a first and a secondo plurality of points on the stator shaft (25) to be measured according to any of the previous claims, the first plurality of points being defined at the first axial end (22), the second plurality of points being defined at the second axial end (23),
defining a first center (W1) of the first plurality of points and a second center (W2) of the second plurality of points,
defining a measured axis (W) of the stator shaft (21) as the axis comprising the first center (W1) and the second center (W2),
assembling the stator (20) including the plurality of segments (45) and the stator shaft (21), so that a misalignment between a geometrical axis of an external surface (48) of the stator (20) and the measured axis (W) of the stator shaft (25) is minimized.
